# EUROPEAN PATENT SPECIFICATION

(11) **EP 2 993 716 B1**
(45) Date of publication and mention of the grant of the patent: **13.12.2017**
(21) Application number: 15180603.1
(22) Date of filing: 11.08.2015
(51) Int. Cl.: H01M 2/22, H01M 2/30, H01M 2/26, H01M 2/14, H01M 2/04

(54) **BATTERY HAVING CAP PLATE COUPLED TO ELECTRODE LEAD**
BATTERIE MIT DECKEL GEKOPPELT MIT DER ELEKTRODENLEITUNG
BATTERIE AYANT COUVERCLE COUPLÉ AU CONDUCTEUR D'ÉLECTRODE

(30) Priority: 14.08.2014 KR 20140106231; 14.08.2014 KR 20140106232; 06.04.2015 KR 20150048323
(43) Date of publication of application: 09.03.2016
(73) Proprietor: Samsung SDI Co., Ltd., Yongin-si, Gyeonggi-do 17084 (KR)
(72) Inventor: HWANG, San, 17084 Gyeonggi-do (KR); YOON, Jangho, 17084 Gyeonggi-do (KR)
(74) Representative: Mounteney, Simon James

(56) References cited:
- EP-A1- 2 154 738
- EP-A1- 2 506 358
- EP-A1- 2 538 467
- EP-A1- 2 597 703
- US-A1- 2003 111 512
- US-A1- 2010 035 132

## Description

### BACKGROUND

### 1. Field

One or more embodiments of the present invention relate to a battery.

### 2. Description of the Related Art

Unlike primary batteries that are not rechargeable, in general, secondary batteries are rechargeable and dischargeable. Along with the development of technology related to mobile devices and increased production of mobile devices, secondary batteries are used as energy sources for mobile devices, such as mobile phones and laptops. Recently, much research has been conducted to use the secondary batteries in electric automobiles and hybrid automobiles as an alternative energy source that can replace fossil fuels.

US2010/035132A1, EP2538467A1 and EP2154738A1 each disclose a battery having an electrode terminal having a centrally located coupling pin for coupling an electrode lead to a cap plate.

### SUMMARY

The present invention sets-out to provide a battery in which an electric resistance of a charge/discharge path is reduced and output performance is improved.

Additional aspects will be set forth in part in the description which follows and, in part, will be apparent from the description, or may be learned by practice of the presented embodiments.

According to one or more embodiments of the present invention, a battery includes the features of claim 1. Optional features of the invention are set out in claims 2 to 11

### BRIEF DESCRIPTION OF THE DRAWINGS

These and/or other aspects of the invention will become apparent and more readily appreciated from the following description of the embodiments, taken in conjunction with the accompanying drawings in which:
FIG. 1 is an exploded perspective view of a battery according to an embodiment of the present invention;
FIG. 2 is an exploded perspective view of some elements illustrated in FIG. 1;
FIG. 3 is a diagram for explaining a coupling structure between elements illustrated in FIG. 2;
FIG. 4 is a diagram of a portion of the battery of FIG. 1, in particular, a coupling structure between a positive electrode lead and a cap plate;
FIG. 5 is a diagram of a coupling structure between a positive electrode lead and a cap plate according to a comparative example;
FIGS. 6A to 6C are diagrams of structures of a positive electrode lead that may be applied to a modified embodiment of the present invention;
FIGS. 7A and 7B are diagrams of various structures in which the positive electrode lead of FIGS. 6A to 6C are applied;
FIG. 8 is a diagram of a structure of a positive electrode lead according to another embodiment of the present invention;
FIG. 9 is a diagram of a structure of a positive electrode lead according to another embodiment of the present invention;
FIG. 10 is a diagram of a structure of a positive electrode lead according to another embodiment of the present invention;
FIG. 11 is a coupling structure of an electrode;
FIGS. 12A and 12B are diagrams of a structure of an electrode lead that may be applied to another embodiment of the present invention;
FIG. 13 is a diagram of a structure of an electrode lead that may be applied to another embodiment of the present invention; and
FIG. 14 is a diagram of a structure of an electrode lead that may be applied to another embodiment of the present invention.

### DETAILED DESCRIPTION

Batteries according to embodiments of the present invention will be described in detail with reference to the accompanying drawings. Expressions such as "at least one of," when preceding a list of elements, modify the entire list of elements and do not modify the individual elements of the list.

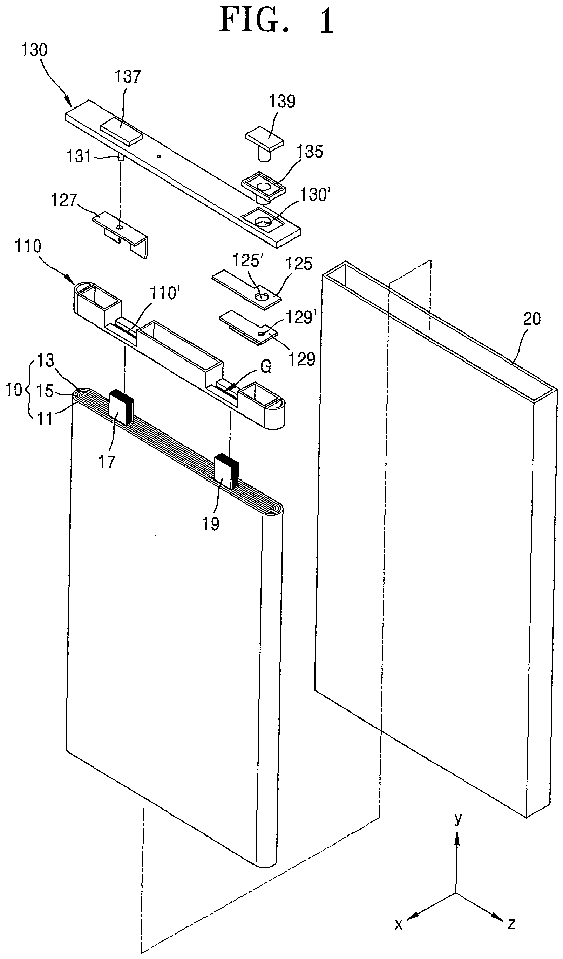

FIG. 1 is an exploded perspective view of a battery according to an embodiment of the present invention.

Referring to FIG. 1, the battery includes an electrode assembly 10, an insulating spacer 110 disposed on the electrode assembly 10, a case 20 that accommodates the electrode assembly 10 and the insulating spacer 110, and a cap plate 130 that covers an upper portion of the case 20.

The electrode assembly 10 is a rechargeable secondary battery and may be a lithium-ion battery. The electrode assembly 10 may include a positive electrode plate 11, a negative electrode plate 13, and a separator 15. The electrode assembly 10 may be sealed inside the case 20 with electrolytes (not shown).

For example, the electrode assembly 10 may be formed by winding a stack formed of the positive electrode plate 11, the negative electrode plate 13, and the separator 15 in the form of a jelly roll. The positive electrode plate 11 may be formed by coating a positive active material on at least one surface of a positive collector (not shown). Similarly, the negative electrode plate 13 may be formed by coating a negative active material on at least one surface of a negative collector (not shown).

For example, according to an embodiment of the present invention, the positive electrode plate 11 may be disposed at an outermost side of the electrode assembly 10. Heat emission through the case 20 is accelerated by disposing the positive electrode assembly that emits relatively large amount of heat at an outer side near the case 20. For example, the positive electrode assembly may directly or thermally contact the case 20. The term "thermally contact" indicates that two elements do not directly contact one another but thermal interaction is allowed between the elements.

The electrode assembly 10 may be accommodated in the case 20 with electrolytes through an upper opening of the case 20. The upper opening of the case 20 may be sealed by the cap plate 130. A portion where the cap plate 130 contacts the case 20 may be welded by a laser and thus air-tightly sealed.

A positive electrode tab 17 and a negative electrode tab 19 may be connected to at least one portion of the positive electrode plate 11 and the negative electrode plate 13, respectively. In the present specification, the positive and negative electrode tabs 17 and 19 may be referred to as "electrode tabs 17 and 19." A high-capacity high-output battery may include a plurality of positive electrode tabs 17 and a plurality of negative electrode tabs 19 that project from the electrode assembly 10. High-current electric output may be obtained and resistance loss may be reduced by including the plurality of positive electrode tabs and negative electrode tabs.

The positive electrode tab 17 may be connected to the cap plate 130, and the negative electrode tab 19 may be connected to a negative electrode terminal 139 that projects from an upper surface of the cap plate 130. For example, a positive electrode terminal 137 and the negative electrode terminal 139 may be exposed through the upper surface of the cap plate 130. The positive electrode terminal 137 may be formed as a portion that integrally protrudes from the cap plate 130 or an additional element that is coupled to the cap plate 130. The positive electrode terminal 137 may have a positive polarity that is the same as the cap plate 130. However, this does not imply that the positive electrode terminal 137 is clearly distinguishable from the cap plate 130. For example, the positive electrode terminal 137 may be the cap plate 130 itself. A battery having low capacitance may not additionally include a terminal, and in this case, the positive electrode terminal 137 may refer to the cap plate 130 itself.

The negative electrode terminal 139 may be formed of an additional element that is assembled by penetrating through the cap plate 130. The negative electrode terminal 139 may be insulatingly coupled to the cap plate 130 and may protrude from the upper surface of the cap plate 130. In the present specification, the positive electrode terminal 137 and the negative electrode terminal 139 may be referred to as "electrode terminals 137 and 139."

The positive and negative electrode tabs 17 and 19 may be gathered in the form of single packs, inserted into tab holes 110' of the insulating spacer 110, and penetrate through an upper portion of the insulating spacer 110. Upper ends of the positive and negative electrode tabs 17 and 19 that penetrate through the insulating spacer 110 may be respectively connected to a positive electrode lead 127 and a negative electrode lead 129.

Before the positive electrode tab 17 is inserted into the insulating spacer 110, the plurality of positive electrode tabs 17 may be gathered in a single pack form by temporary welding. The plurality of positive electrode tabs 17 gathered in a single pack form by temporary welding may be easily inserted into the tab hole 110'. Similarly, before the negative electrode tab 19 is inserted into the insulating spacer 110, the plurality of negative electrode tabs 19 may be gathered in a single pack form by temporary welding.

The positive electrode tab 17 is exposed through the upper portion of the insulating spacer 110 by penetrating through the tab hole 110' of the insulating spacer 110, and the upper end of the positive electrode tab 17 is connected to the positive electrode lead 127. Also, the positive electrode lead 127 is connected to the cap plate 130. Accordingly, the positive electrode tab 17 of the electrode assembly 10 is electrically connected with the cap plate 130 via the positive electrode lead 127. The entire cap plate 130 may have a positive polarity that is the same as the positive electrode tab 17, and a portion of the cap plate 130 may protrude to form the positive electrode terminal 137.

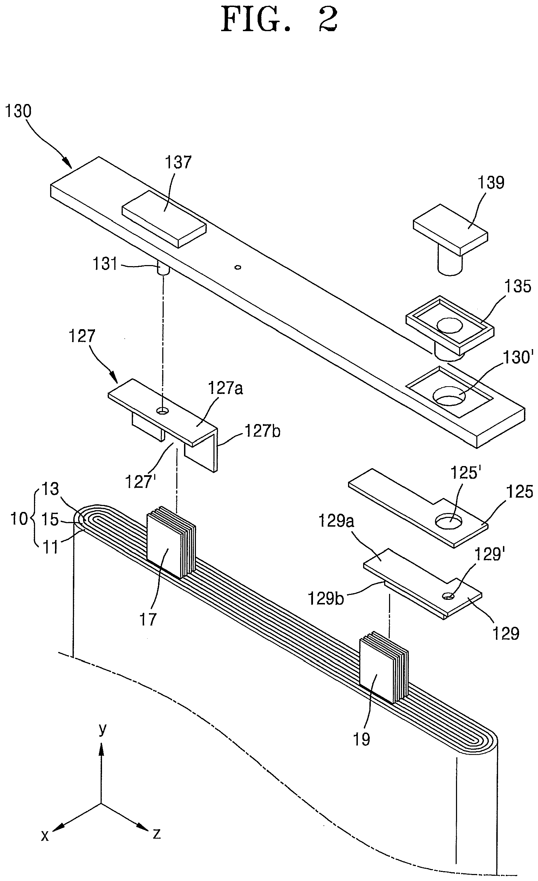

FIG. 2 is an exploded perspective view of some elements illustrated in FIG. 1. Referring to FIG. 2, the positive electrode lead 127 may be bent in an 'L' shape. In detail, the positive electrode lead 127 may be bent and extend in two different directions. A first part 127a of the positive electrode lead 127 is disposed to face the cap plate 130 and be coupled to the cap plate 130. Also, a second part 127b of the positive electrode lead 127, which extends in a different direction from the first part 127a, is may disposed to face the positive electrode tab 17 and is coupled to the positive electrode tab 17. Therefore, in order to be coupled to the positive electrode tab 17 and the cap plate 130, the positive electrode lead 127 may be bent in different directions such that the first and second parts 127a and 127b face counterparts to be coupled.

The second part 127b of the positive electrode lead 127 may have a divided form. In particular, the second part 127b of the positive electrode lead 127 includes an avoidance space 127' to avoid mechanical interference between the second part 127b and a coupling pin 131. When an end of the coupling pin 131 undergoes a riveting or spinning process during a process of coupling the cap plate 130 and the positive electrode lead 127, the avoidance space 127' provides an extra space for accommodating an end of the coupling pin 131 which expanded by being pressed with a manufacturing tool. That is, an end of the coupling pin 131 is formed as a head unit that expands to the outside and pressed onto a coupling surface, and the head unit of the coupling pin 131 is accommodated in the avoidance space 127'.

The positive electrode lead 127 may include the first part 127a that is shaped like a whole plate, the second part 127b that is divided into two parts with the avoidance space 127' in between, and the first and second parts 127a and 127b may be bent with respect to each other.

According to another embodiment not forming part of the present invention, the positive electrode lead 127 may not have the avoidance space 127'. For example, the positive electrode lead 127 may not have the avoidance space 127' according to a size of the coupling pin 131 that couples the cap plate 130 and the positive electrode lead 127. For example, if the coupling pin 131 is relatively large, i.e., if the coupling pin 131 has a large diameter, the positive electrode lead 127 may have the avoidance space 127'. Alternatively, if the coupling pin 131 is relatively small, i.e., if the coupling pin 131 has a small diameter, the avoidance space 127' may not be formed in the positive electrode lead 127. If the avoidance space 127' is formed in the positive electrode lead 127, the mechanical strength may be decreased because the second part 127b of the positive electrode lead 127 is divided. For example, the size of the coupling pin 131 may vary according to mechanical strength that is required between the cap plate 130 and the positive electrode lead 127.

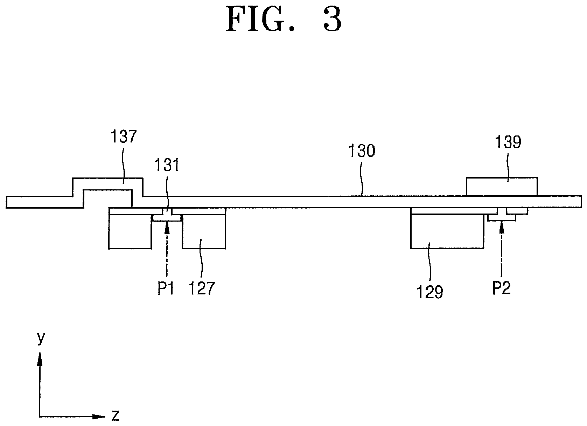

FIG. 3 is a diagram for explaining a coupling structure between elements illustrated in FIG. 2.

Referring to FIG. 3, the positive electrode lead 127 may be coupled to the cap plate 130 by using the coupling pin 131 that protrudes from the cap plate 130. For example, the coupling pin 131 that protrudes from the lower surface of the cap plate 130 may penetrate through the positive electrode lead 127, and a lower end of the coupling pin 131 that is exposed through a lower surface of the positive electrode lead 127 may be pressed onto the lower surface of the positive electrode lead 127 by using a riveting method or a spinning method (refer to a coupling position P1). For example, during the riveting process, the lower end of the coupling pin 131, which is exposed through the lower surface of the positive electrode lead 127, is hit with a hammer so that the lower end of the coupling pin 131 is pressed onto the lower surface of the positive electrode lead 127. During the spinning process, pressure is applied to the lower end of the coupling pin 131 that is exposed through the lower surface of the positive electrode lead 127 with a quickly rotating manufacturing tool so that the lower end of the coupling pin 131 is pressed onto the lower surface of the positive electrode lead 127. Alternatively, the positive electrode lead 127 and the cap plate 130 may be welded to each other. The coupling structure between the positive electrode lead 127 and the cap plate 130 will be described in detail below.

Referring to FIG. 2, the negative electrode tab 19 penetrates through the tab hole 110' of the insulating spacer 110 and is exposed through the upper portion of the insulating spacer 110, and an exposed upper end of the negative electrode tab 19 is connected to the negative electrode lead 129. Next, the negative electrode lead 129 is coupled to the negative electrode terminal 139. Accordingly, the negative electrode tab 19 of the electrode assembly 10 is electrically connected to the negative electrode terminal 139 via the negative electrode lead 129. As a reference, in the present specification, the positive and negative electrode leads 127 and 129 may be referred to as "electrode leads 127 and 129."

The negative electrode lead 129 may be entirely bent in an 'L' shape. In other words, a first part 129a of the negative electrode lead 129 may be disposed to face the cap plate 130 and coupled to the cap plate 130. Also, a second part 129b of the negative electrode lead 129, which extends in a different direction from the first part 129a, may be disposed to face the negative electrode tab 19 and be coupled to the negative electrode tab 19. In order to be coupled to the cap plate 130 and the negative electrode tab 19, the negative electrode lead 129 may be bent in different directions such that the first and second parts 129a and 129b face counterparts to be coupled. However, the embodiments of the present invention are not limited thereto, and for example, the negative electrode lead 129 may be shaped in the form of a flat plate.

The negative electrode terminal 139 is assembled in the cap plate 130 with a gasket 135 between the negative electrode terminal 139 and the cap plate 130. The cap plate 130 includes a terminal hole 130' through which the negative electrode terminal 139 passes. The negative electrode terminal 139 is inserted into the terminal hole 130' of the cap plate 130 with the gasket 135 in between, and thus, the negative electrode terminal 139 may be electrically insulated from the cap plate 130. The gasket 135 may seal a surrounding area of the terminal hole 130' so that the electrolytes accommodated in the case 20 do not leak and external impurities are blocked.

An insulating plate 125 may be provided between the negative electrode lead 129 and the cap plate 130 to electrically insulate the negative electrode lead 129 and the cap plate 130. The insulating plate 125 and the gasket 135 electrically insulate the cap plate 130, which is electrically connected to the positive electrode tab 17 of the electrode assembly 10, from an opposite polarity. The negative electrode lead 129 and the insulating plate 125 may respectively include terminal holes 125' and 129' through which the negative electrode terminal 139 passes.

The negative electrode terminal 139 passes through the terminal holes 125', 129', and 130' of the insulating plate 125, the negative electrode lead 129, and the cap plate 130. When a lower portion of the negative electrode terminal 139 is pressed onto a lower surface of the negative electrode lead 129, the cap plate 130, the insulating plate 125, and the negative electrode lead 129 may be aligned and integrally coupled to one another.

For example, the negative electrode terminal 139 may be pressed onto the lower surface of the negative electrode lead 129 by stacking the cap plate 130, the negative electrode lead 129, and the insulating plate 125 on one another, inserting the negative electrode terminal 139 into the terminal holes 125', 129', and 130' from an upper portion of the cap plate 130, and performing a riveting or spinning process on the lower portion of the negative electrode terminal 139, which is exposed through the lower surface of the negative electrode lead 129.

Referring to FIG. 3, although the lower portion of the negative electrode terminal 139 is pressed onto the lower surface of the negative electrode lead 129, the lower portion of the negative electrode terminal 139 may be additionally welded so that the negative electrode terminal 139 is more stably attached to the negative electrode lead 129 (refer to a coupling position P2). This is because the coupling of the negative electrode terminal 139 and the negative electrode lead 129 forms a charge/discharge path on a negative electrode side. An upper portion of the negative electrode terminal 139 may be formed as a plate protruding from a cylindrical body and be pressed onto the upper surface of the cap plate 130.

Referring to FIG. 1, similar to the insulating plate 125 that is disposed between the cap plate 130 and the negative electrode lead 129, an additional insulating plate (not shown) may be disposed between the cap plate 130 and the positive electrode lead 127. The additional insulating plate may be inserted to maintain a balance between a distance between the cap plate 130 and the positive electrode lead 127 and a distance between the cap plate 130 and the negative electrode lead 129. Also, the additional insulating plate may be disposed between the cap plate 130 and the positive electrode lead 127 to increase a coupling strength generated when pressed by using the coupling pin 131.

The insulating spacer 110 is disposed between the electrode assembly 10 and the cap plate 130. The insulating spacer 110 is formed of an insulating material to prevent electrical interference or a short circuit between the electrode assembly 10 and the cap plate 130. In detail, the insulating spacer 110 may be disposed between the electrode assembly 10 and the electrode leads 127 and 129. Also, the insulating spacer 110 gathers the plurality of electrode tabs 17 and 19 of the electrode assembly 10 so that electrical connection of the electrode leads 127 and 129 are easily conducted.

For example, the plurality of positive and negative electrode tabs 17 and 19 that protrude upward from the electrode assembly 10 may be gathered as they penetrate through the tab hole 110' of the insulating spacer 110. A pack of the positive and negative electrode tabs 17 and 19 that are gathered as described above may be electrically connected to the positive and negative electrode leads 127 and 129 by welding.

The insulating spacer 110 may secure an appropriate amount of space between the electrode assembly 10 and the cap plate 130 so that the electrode tabs 17 and 19 are insulated even when external shock is applied due to falling or other causes.

The insulating spacer 110 may include a welding groove G to weld the electrode tabs 17 and 19 and the electrode leads 127 and 129. For example, the welding groove G may be formed on the tab hole 110' of the electrode tabs 17 and 19. The welding groove G may allow the positive and negative electrode tabs 17 and 19, which pass through the tab hole 110', to be exposed through the insulating spacer 110, and to be welded with the positive and negative electrode leads 127 and 129. For example, the electrode tabs 17 and 19 and the electrode leads 127 and 129 may be welded by ultrasonic welding.

According to an embodiment of the present invention, the positive electrode lead 127 and the cap plate 130 may be coupled to each other by using the coupling pin 131 that protrudes from the cap plate 130. For example, the coupling pin 131 that protrudes from the cap plate 130 may penetrate through the positive electrode lead 127, and the lower end of the coupling pin 131, which is exposed through the lower surface of the positive electrode lead 127, may be pressed onto the lower surface of the positive electrode lead 127 by using a hammer or a quickly rotating manufacturing tool. However, according to the embodiments of the present invention, the coupling of the cap plate 130 and the positive electrode lead 127 is not limited to the description above. For example, the coupling pin 131, which couples the cap plate 130 and the positive electrode lead 127, may be formed on the cap plate 130 or on the positive electrode lead 127. Also, the cap plate 130 and the positive electrode lead 127 may be coupled to each other by welding.

The coupling of the positive electrode lead 127 and cap plate 130 may form a charge/discharge path between the electrode assembly 10 and the positive electrode terminal 137. In other words, the contact and coupling of the positive electrode lead 127 and the cap plate 130 may affect electric resistance of the charge/discharge path.

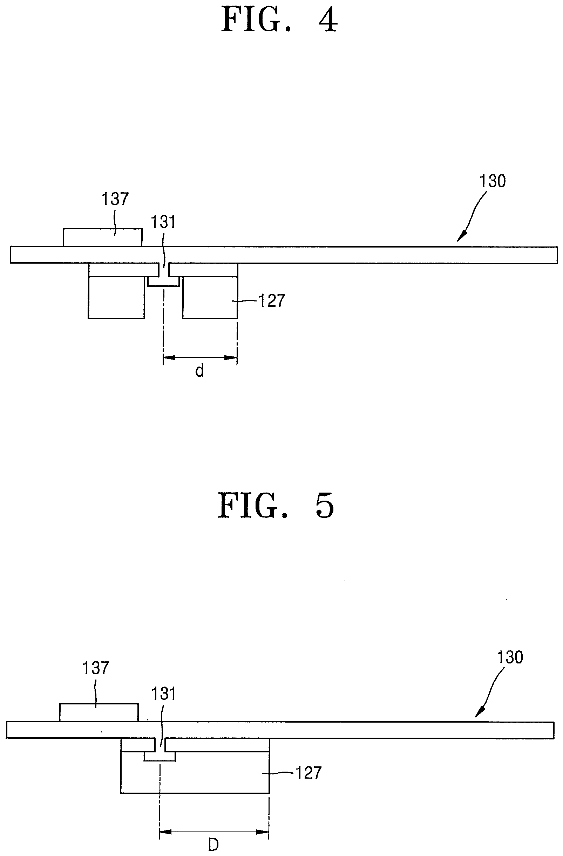

FIG. 4 is a diagram of a portion of the battery of FIG. 1, i.e., a coupling structure between the positive electrode lead 127 and the cap plate 130. Referring to FIG. 4, the positive electrode lead 127 and the cap plate 130 are coupled to each other. A coupling location is the center of the positive electrode lead 127. In FIG. 4, the coupling location extends at a distance d from an end of the positive electrode lead 127.

The coupling strength of the positive electrode lead 127 and the cap plate 130, i.e., how much the positive electrode lead 127 and the cap plate 130 are firmly coupled to each other, is closely related to the electric resistance of the entire charge/discharge path of the battery which crosses the positive electrode lead 127 and the cap plate 130.

For example, if the positive electrode lead 127, which is electrically connected to the electrode assembly 10, firmly surface contacts the cap plate 130 (in particular, the positive electrode terminal 137 of the cap plate 130), which is electrically connected to an external device, without any gaps, the electric resistance of the charge/discharge path may be reduced. On the contrary, if there is a gap or tiny gaps partially formed between the positive electrode lead 127 and the cap plate 130, or if the positive electrode lead 127 unevenly contacts the cap plate 130, a portion of a contact surface between the positive electrode lead 127 and the cap plate 130 becomes an invalid area. Then, a valid area that forms an electric path decreases and thereby causes the electric resistance of the charge/discharge path to increase.

According to an embodiment of the present invention, the coupling location of the positive electrode lead 127 and the cap plate 130 is set in the center of the positive electrode lead 127 so that the adhesive strength may be formed uniformly over an coupling surface of the positive electrode lead 127. Thus, the positive electrode lead 127 and the cap plate 130 may uniformly surface contact in all areas, and gaps may not be formed between the positive electrode lead 127 and the cap plate 130.

According to an embodiment of the present invention, setting the coupling location of the positive electrode lead 127 and the cap plate 130 in the center of the positive electrode lead 127 may indicate that the coupling location is formed in the center along a longitudinal direction of the positive electrode lead 127. In other words, the coupling location is set in the center of the positive electrode lead 127 in the longest dimension of the positive electrode lead 127 so that the coupling strength is uniform over an area as large as possible.

However, the scope of the present invention is not limited to the description above. For example, according to another embodiment of the present invention, the center of the positive electrode lead 127 may indicate the center along any one direction of the positive electrode lead 127. For example, when the coupling location is set at the center along any one direction of the positive electrode lead 127, the adhesive strength between the positive electrode lead 127 and the cap plate 130 may be in uniform.

According to the present specification, the coupling location of the positive electrode lead 127 and the cap plate 130 may indicate an assembled location of the coupling pin 131 that couples the positive electrode lead 127 and the cap plate 130. Although the positive electrode lead 127 and the cap plate 130 are coupled to each other by the coupling pin 131 according to an embodiment of the present invention, according to another embodiment of the present invention, the positive electrode lead 127 and the cap plate 130 may be coupled to each other by welding. In such embodiment, the coupling location of the positive electrode lead 127 and the cap plate 130 may indicate a welded area therebetween (e.g., a location of a welding point).

FIG. 5 is a diagram of a coupling structure between the positive electrode lead 127 and the cap plate 130 according to a comparative example. Referring to FIG. 5, the positive electrode lead 127 and the cap plate 130 may be coupled to each other by the coupling pin 131. In this case, the coupling location of the positive electrode lead 127 and the cap plate 130 may be biased toward left or right side along the positive electrode lead 127. In FIG. 5, the coupling location extends at a distance D from an end of the positive electrode lead 127

For example, if the coupling location is biased toward the left side along the positive electrode lead 127, a coupling strength of the left side of the positive electrode lead 127 may be relatively strong, but a coupling strength of the right side of the positive electrode lead 127 may be relatively weak. Since the coupling strength varies in the positive electrode lead 127, the electric resistance between the positive electrode lead 127 and the cap plate 130 is different according to locations.

For example, at a location where the coupling strength of the positive electrode lead 127 and the cap plate 130 is relatively weak, a gap may be created or the positive electrode lead 127 and the cap plate 130 may be not completely contacting each other. Accordingly, an invalid area that does not materially provide an electric path may be formed, and the electric resistance is increased. When the electric resistance of the charge/discharge path of the battery is increased, an output performance of the electric resistance is deteriorated.

According to an embodiment of the present invention, the coupling location of the positive electrode lead 127 and the cap plate 130 is the center of the positive electrode lead 127 so that the coupling strength is uniform in the positive electrode lead 127. Since the coupling strength between the positive electrode lead 127 and the cap plate 130 is uniform, the positive electrode lead 127 firmly surface contacts the cap plate 130, and the electric resistance of the charge/discharge path may be reduced.

The technical principles of the embodiments of the present invention may be applied to both of the positive and negative electrode leads 127 and 129. For example, the negative electrode terminal 139, which couples the negative electrode lead 129 and the cap plate 130, may be used to couple the negative electrode lead 129 and the cap plate 130 in the center of the negative electrode lead 129.

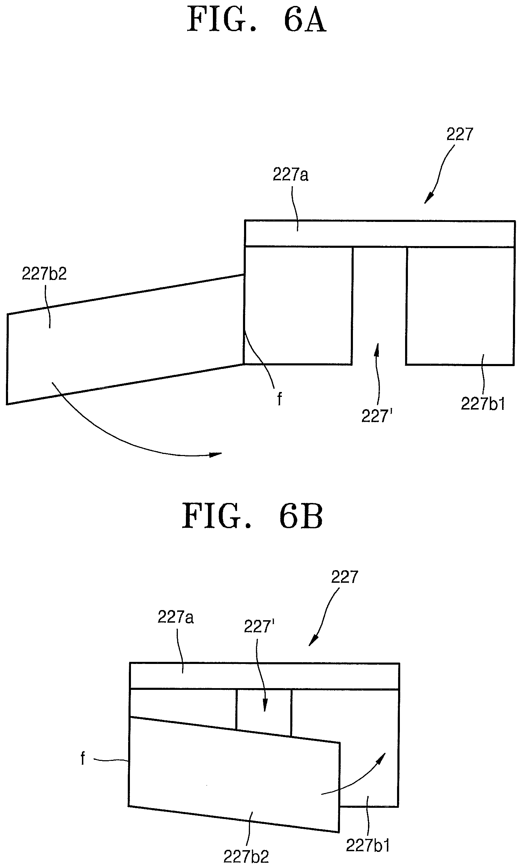

FIGS. 6A to 6C are diagrams of structures of the positive electrode lead 227 that may be applied to a modified embodiment of the present invention. The positive electrode lead 227 may be partially or entirely formed in two layers. The positive electrode lead 227 may include a first part 227a that is coupled to the cap plate 130, and a second part 227b that is coupled to the positive electrode tab 17. The second part 227b may be formed in two layers. That is, as illustrated in the drawings, the second part 227b of the positive electrode lead 227 may have a two layer structure which includes a first layer 227b1 and a second layer 227b2. The first layer 227b1 is connected to the first part 227a and divided into two parts by an avoidance space 227'. Also, the second layer 227b2 is connected to the first layer 227b1, and formed as a full plate. The second layer 227b2 overlaps the first layer 227b1 around a folded portion f, and thus the second part 227b having a two layer structure is formed. The second layer 227b2 may cover a portion of the avoidance space 227' formed in the first layer 227b1, but the second layer 227b2 may be narrower than the first layer 227b1 such that at least a portion of the avoidance space 227' (a portion of the avoidance space 227' that is near the first part 227a) is exposed.

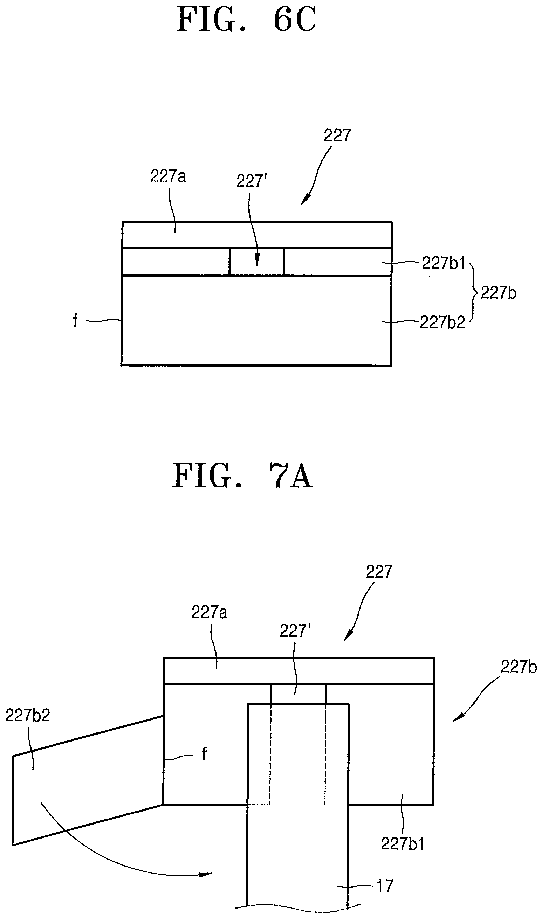

If the positive electrode lead 227 is partially or entirely formed in two layers, a mechanical strength of the positive electrode lead 227 may be increased. If the mechanical strength of the positive electrode lead 227 is increased, the positive electrode lead 227 moves less. As shown in FIG. 6C, in overall view, the second part 227b is formed as a plate in which the avoidance space 227' is punched as a hole. Although the second part 227b may be formed in two layers according to the present embodiment, according to another embodiment of the present invention, the second part 227b may be formed as a single layer structure in which the avoidance space 227' is formed as a hole.

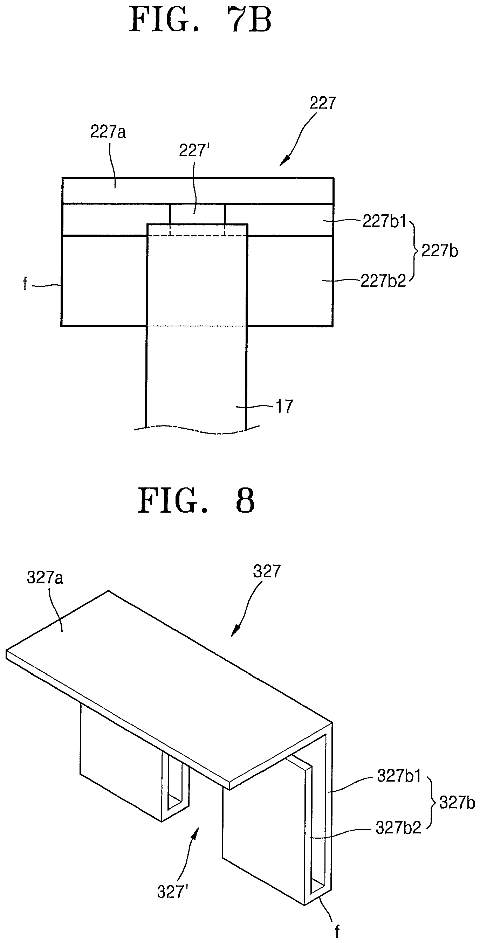

FIGS. 7A and 7B are diagrams of various structures in which the positive electrode lead 227 of FIGS. 6A and 6B are applied. In other words, as illustrated in FIGS. 7A and 7B, the second part 227b of the positive electrode lead 227, which is coupled to the positive electrode tab 17, are formed in two layers. In this case, according to the embodiment illustrated in FIG. 7A, the positive electrode tab 17 is disposed between the first layer 227b1 and the second layer 227b2. In other words, the positive electrode tab 17 overlaps on the first layer 227b1, and the second layer 227b2 covers the positive electrode tab 17. In other words, the first layer 227b1 and the second layer 227b2 may be disposed at the front and back of the positive electrode tab 17 such that the positive electrode tab 17 is covered, and then welding may be performed. In this case, since the positive electrode lead 227, which includes the first and second layers 227b1 and 227b2, is covering the positive electrode tab 17, a welding strength may be improved.

If the positive electrode tab 17 is directly welded onto the first layer 227b1, in which a certain amount of space is excluded due to the avoidance space 227', a welded area is decreased as much as the certain amount, and thus, the welding strength is decreased. Therefore, the welding is performed between the second layer 227b2 that has a complete shape and the positive electrode tab 17.

According to the embodiment illustrated in FIG. 7B, the second layer 227b2 is disposed on the first layer 227b1, and then, the positive electrode tab 17 is disposed thereon. That is, the positive electrode tab 17 is disposed on two layers formed by the first and second layers 227b1 and 227b2, the positive electrode tab 17 is disposed on the second layer 227b2, and the welding is performed therebetween. Similar to the description above, if the positive electrode tab 17 is directly welded onto the first layer 227, in which a certain amount of space is excluded due to the avoidance space 227', a welded area is decreased as much as the certain amount, and thus, the welding strength is decreased. Therefore, the welding is performed between the second layer 227b2 that has a complete shape and the positive electrode tab 17.

FIG. 8 is a diagram of a structure of a positive electrode lead 327 according to another embodiment of the present invention. The positive electrode lead 327 includes a second part 327b that is formed in two layers and coupled to the positive electrode tab 17. In this case, a first layer 327b1 and a second layer 327b2 of the second part 327b both include an avoidance space 327'. In particular, the first and second layers 327b1 and 327b2 are connected to each other, bent with respect to each other around a folded portion f, and thus form two layers of the second part 327b. For example, the second layer 327b2 may be bent upward in a direction facing a first part 327a. The second layer 327b2 may be bent upward to contact the first part 327a. Accordingly, since the first part 327a may be supported by the first and second layers 327b1 and 327b2 of the second part 327b in different portions, a strength of a bending portion between the first and second parts 327a and 327b may be increased.

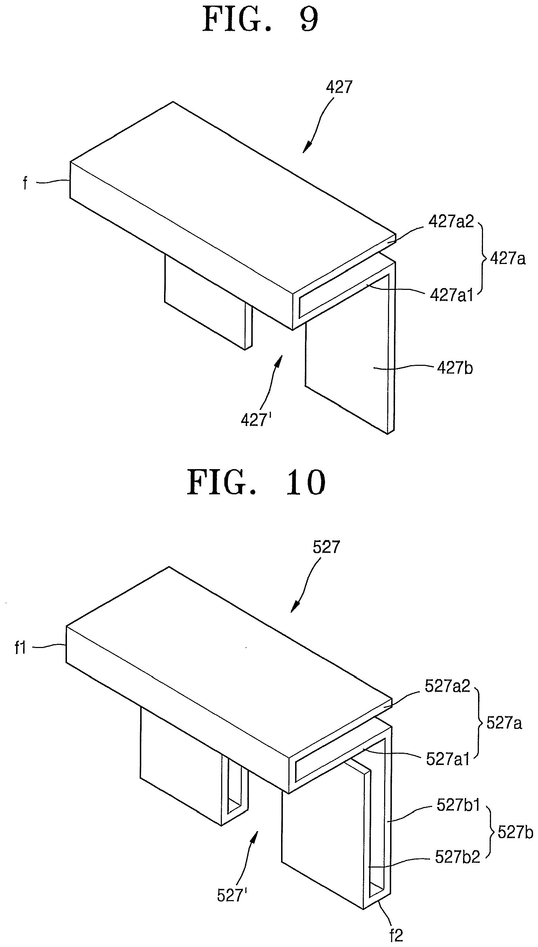

FIG. 9 is a diagram of a structure of a positive electrode lead 427 according to another embodiment of the present invention. The positive electrode lead 427 includes a first part 427a that is coupled to the cap plate 130 and has two layers. The first part 427a includes a first layer 427a1 and a second layer 427a2. The first and second layers 427a1 and 427a2 form the first part 427a having two layers by being connected to each other and overlapping each other. For example, the first and second layers 427a1 and 427a2 may form the first part 427a that has two layers by being bent in a direction toward each other around a folded portion f.

FIG. 10 is a diagram of a structure of a positive electrode lead 527 according to another embodiment of the present invention. Referring to FIG. 10, the positive electrode lead 527 includes a first part 527a and a second part 527b each formed in two layers. For example, the first part 527a includes a first layer 527a1 and a second layer 527a2 that overlap each other around a first folded portion f1, and the second part 527b includes a first layer 527b1 and a second layer 527b2 that overlap each other around a second folded portion f2.

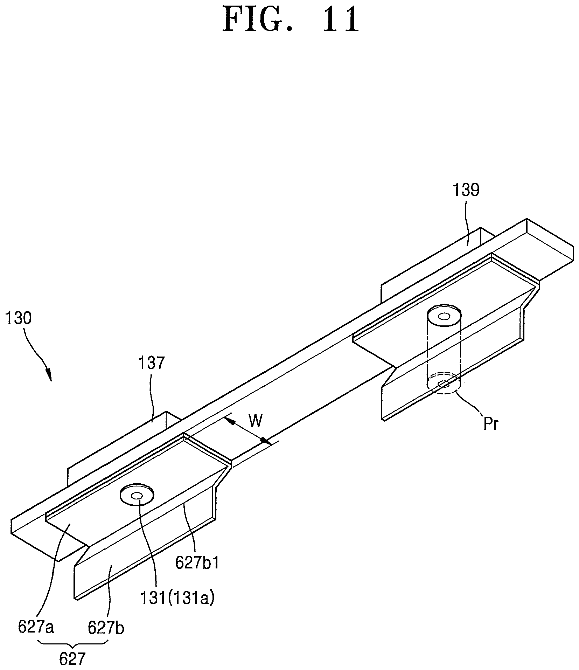

FIG. 11 is a coupling structure of an electrode lead. Referring to FIG. 11, the coupling pin 131 that protrudes from the cap plate 130 penetrates through an electrode lead 627 and is pressed onto a lower surface of the electrode lead 627. For example, the coupling pin 131 penetrates through the electrode lead 627 and exposed through the lower surface of the electrode lead 627. When a riveting process or a spinning process is performed on a lower end 131a of the coupling pin 131 which is exposed through the lower surface of the electrode lead 627, the lower end 131a may be pressed onto the lower surface of the electrode lead 627.

The electrode lead 627 may include a first part 627a that is coupled to the cap plate 130, and a second part 627b that bends from the first part 627a and extends downward. A portion of the lower end 131a may be disposed to overlap the second part 627b. In other words, a portion Pr of the lower end 131a which extends downward, that is, as illustrated in FIG. 11, the portion pr of the lower end 131a which projects downward, may overlap the second part 627b.

This will be described more in detail below.

The lower end 131a may be coupled to the center of the first part 627a in a width W direction. Also, the second part 627b of the electrode lead 627 may extend downward from the front or the back of the first part 627a. Since the second part 627b of the electrode lead 627 is connected to an electrode tab of an electrode assembly, the second part 627b may be inclined toward the center of the electrode assembly, i.e., the center of the first part 627a in the width W direction.

In this case, if the electrode lead 627 is observed from the bottom, a portion of the lower end 131a, which is formed at the center of the first part 627a of the electrode lead 627, may overlap the second part 627b. That is, the portion Pr of the lower end 131a which extends downward, i.e., the portion Pr of the lower end 131a which projects downward, may overlap the second part 627b of the electrode lead 627.

As shown in FIG. 11, the second part 627b of the electrode lead 627 extends downward while inclining toward the center of the first part 627a from the front or the back of the first part 627a. For example, a bent portion 627b1 may be formed in the second part 627b, and because of the bent portion 627b1, the second part 627b may extend toward the center of the first part 627a.

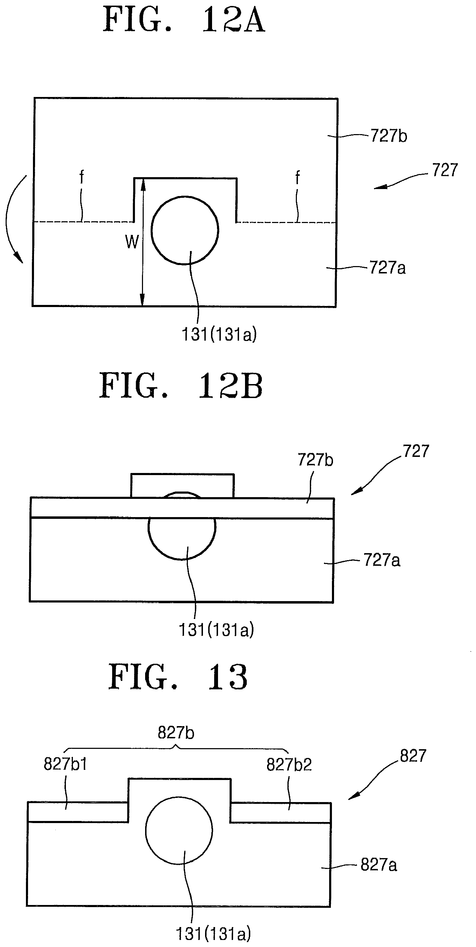

FIGS. 12A and 12B are diagrams of a structure of an electrode lead 727 that may be applied to another embodiment of the present invention. Referring to FIGS. 12A and 12B, the electrode lead 727 includes a first part 727a that is coupled to a cap plate, and a second part 727b that extends from the first part 727a to an electrode tab of an electrode assembly.

The first and second parts 727a and 727b of the electrode lead 727 are connected to each other by two folded portions f so that they are bent with respect to each other. In this case, the first part 727a may be expanded between the folded portions f that are spaced apart.

The coupling pin 131, which is connected to the cap plate, is formed in the first part 727a. Since the lower end 131a of the coupling pin 131 is pressed at a coupling location of the coupling pin 131, in order to improve a coupling strength, the coupling pin 131 may be formed over a large area. Also, the second part 727b coupled to the electrode assembly (in particular, the electrode tab) may be formed at the center of the electrode assembly (for example, the center of the first part 727a in a width W direction) to increase a coupling strength with the electrode assembly.

As a result, at the coupling location of the coupling pin 131, a portion of the first part 727a between the folded portions f expands such that an area of the first part 727a that is coupled to the cap plate is increased. Also, the folded portions f, which form a boundary between the first and second parts 727a and 727b, may be formed as close to the center as possible along the width W direction of the first part 727a. According to the embodiment illustrated in FIGS. 12A and 12B, the second part 727b may be formed as a plate.

FIG. 13 is a diagram of a structure of an electrode lead 827 that may be applied to another embodiment of the present invention. Referring to FIG. 13, the electrode lead 827 includes a first part 827a coupled to a cap plate, and a second part 827b that extends from the first part 827a toward an electrode tab of an electrode assembly. According to the present embodiment, the second part 827b may be divided into two parts 827b1 and 827b2. The electrode lead 827 having such structure may provide an avoidance space for avoiding interference with the coupling pin 131 that couples the electrode lead 827 with the cap plate.

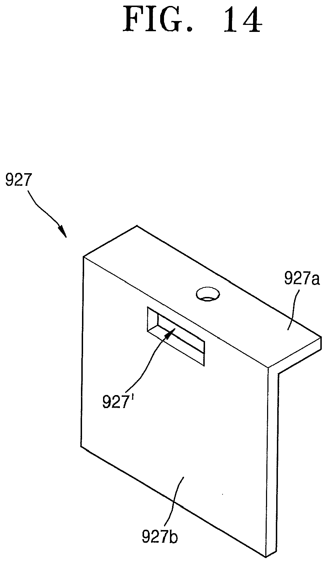

FIG. 14 is a diagram of a structure of an electrode lead 927 that may be applied to another embodiment of the present invention. Referring to FIG. 14, the electrode lead 927 includes a first part 927a coupled to the cap plate, and a second part 927b that extends from the first part 927a to an electrode tab of an electrode assembly. The electrode lead 927 having such structure may provide an avoidance space 927' for avoiding interference with the coupling pin 131 that couples the electrode lead 927 with the cap plate. In particular, the second part 927b may be formed as a plate having the avoidance space 927' punched as a hole.

According to an embodiment of the present invention, a coupling location of a cap plate and a lead may be set in the center of the lead so that a coupling strength is uniform across the entire coupling surface of the lead, and partial gaps and incomplete contact due to weak coupling strength between the cap plate and the lead are prevented. Therefore, an electric resistance of a charge/discharge path may be reduced and output performance of a battery may be improved.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

## Claims

1. A battery comprising:
an electrode assembly (10);
a cap plate (130) comprising an electrode terminal (137); and
an electrode lead (127) coupled to the cap plate (130), wherein the electrode lead (127) electrically connects the electrode assembly (10) and the electrode terminal (137);
wherein a coupling location of the cap plate (130) and the electrode lead (127) is the center of the electrode lead (127);
wherein the cap plate (130) comprises a coupling pin (131) that protrudes via the electrode lead (127);
wherein an end of the coupling pin (131) is pressed onto the electrode lead (127) on an opposite side of the electrode lead (127) to the cap plate (130) and wherein the said end of the coupling pin (131) is formed as a head unit that expands to the outside; wherein the electrode lead (127) comprises
a first part (127a) that faces and is coupled to the cap plate (130); and
a second part (127b) that bends from the first part (127a) and is coupled to an electrode tab (17) that projects from the electrode assembly (10); **characterized in that** an avoidance space (127') to avoid mechanical interference between the second part (127b) and the coupling pin (131), is formed in the second part (127b) of the electrode lead (127); and
the head unit being accommodated in the avoidance space (127').

2. A battery according to claim 1, wherein the second part (127) of the electrode lead (127) is divided into two parts by the avoidance space (127').

3. A battery according to claim 1 or 2, wherein the second part (127b) of the electrode lead (127) is formed as a plate in which the avoidance space (127') is located as a hole.

4. A battery according to one of claims 1 to 3, wherein the second part (227b) of the electrode lead (227) comprises a first layer (272b1) and a second layer (272b2), and
wherein the electrode tab (17) is disposed between the first and second layers.

5. A battery according to one of claims 1 to 3, wherein the second part (227b) of the electrode lead (227) comprises a first layer (272b1) and a second layer (272b2), and
wherein the electrode tab (17) is disposed on the first and second layers.

6. A battery according to claim 1, wherein the second part (227b) of the electrode lead (227) comprises a first layer (227b1) and a second layer (227b2),
wherein the first layer (227b1) is divided into two parts to provide an avoidance space (227'),
wherein the second layer (227b2) is formed as a whole plate, and
wherein the second layer (227b2) covers a portion of the avoidance space (277') of the first layer (227b1).

7. A battery according to claim 1, wherein the second part (327b) of the electrode lead (327) comprises a first layer (327b1) and a second layer (327b2), and
wherein the first and second layers are divided into two parts to provide an avoidance space (327').

8. A battery according to any preceding claim, wherein the first part (427a) of the electrode lead (427) comprises a first layer (427a1) and a second layer (427b1).

9. A battery according to claim 1, wherein the electrode lead (127) is partially or entirely formed in two layers.

10. A battery according to claim 1, wherein the electrode lead (127) comprises folded portions that connect the first and second parts, such that the first and second parts are bent with respect to each other, and
wherein the first part expands between two folded portions that are spaced apart.

11. A battery according to claim 10, wherein the coupling pin is coupled to an expanded portion of the first part.

## Patentansprüche

1. Batterie, die Folgendes umfasst:
eine Elektrodenbaugruppe (10),
eine Abdeckplatte (130), die einen Elektrodenanschluss (137) umfasst, und
eine Elektrodenleitung (127), die an die Abdeckplatte (130) angeschlossen ist, wobei die Elektrodenleitung (127) die Elektrodenbaugruppe (10) und den Elektrodenanschluss (137) elektrisch verbindet,
wobei eine Anschlussposition der Abdeckplatte (130) und der Elektrodenleitung (127) die Mitte der Elektrodenleitung (127) ist,
wobei die Abdeckplatte (130) einen Anschlussstift (131) umfasst, der durch die Elektrodenleitung (127) vorspringt,
wobei ein Ende des Anschlussstifts (131) auf einer zu der Abdeckplatte (130) entgegengesetzten Seite der Elektrodenleitung (127) auf die Elektrodenleitung (127) gepresst wird und wobei das Ende des Anschlussstifts (131) als eine Kopfeinheit geformt ist, die sich nach außen ausdehnt,
wobei die Elektrodenleitung (127) Folgendes umfasst
einen ersten Teil (127a), der zu der Abdeckplatte (130) zeigt und an dieselbe angeschlossen ist, und
einen zweiten Teil (127b), der sich von dem ersten Teil (127a) biegt und an eine Elektrodenlasche (17) angeschlossen ist, die von der Elektrodenbaugruppe (10) vorspringt,
**dadurch gekennzeichnet, dass** ein Vermeidungsraum (127'), um eine mechanische Überlagerung zwischen dem zweiten Teil (127b) und dem Anschlussstift (131) zu vermeiden, in dem zweiten Teil (127b) der Elektrodenleitung (127) geformt ist, und
die Kopfeinheit in dem Vermeidungsraum (127') aufgenommen wird.

2. Batterie nach Anspruch 1, wobei der zweite Teil (127b) der Elektrodenleitung (127) durch den Vermeidungsraum (127') in zwei Teile geteilt wird.

3. Batterie nach Anspruch 1 oder 2, wobei der zweite Teil (127b) der Elektrodenleitung (127) als eine Platte geformt ist, in welcher der Vermeidungsraum (127') als ein Loch angeordnet ist.

4. Batterie nach einem der Ansprüche 1 bis 3, wobei der zweite Teil (227b) der Elektrodenleitung (227) eine erste Lage (272b1) und eine zweite Lage (272b2) umfasst und
wobei die Elektrodenlasche (17) zwischen der ersten und der zweiten Lage angeordnet ist.

5. Batterie nach einem der Ansprüche 1 bis 3, wobei der zweite Teil (227b) der Elektrodenleitung (227) eine erste Lage (272b1) und eine zweite Lage (272b2) umfasst und
wobei die Elektrodenlasche (17) auf der ersten und der zweiten Lage angeordnet ist.

6. Batterie nach Anspruch 1, wobei der zweite Teil (227b) der Elektrodenleitung (227) eine erste Lage (227b1) und eine zweite Lage (227b2) umfasst,
wobei die erste Lage (227b1) in zwei Teile geteilt ist, um einen Vermeidungsraum (227') bereitzustellen,
wobei die zweite Lage (227b2) als eine ganze Platte geformt ist und
wobei zweite Lage (227b2) einen Abschnitt des Vermeidungsraums (227') der ersten Lage (227b1) abdeckt.

7. Batterie nach Anspruch 1, wobei der zweite Teil (327b) der Elektrodenleitung (327) eine erste Lage (327b1) und eine zweite Lage (327b2) umfasst und
wobei die erste und die zweite Lage in zwei Teile geteilt sind, um einen Vermeidungsraum (327') bereitzustellen,

8. Batterie nach einem der vorhergehenden Ansprüche, wobei der erste Teil (427a) der Elektrodenleitung (427) eine erste Lage (427a1) und eine zweite Lage (427b1) umfasst.

9. Batterie nach Anspruch 1, wobei die Elektrodenleitung (127) teilweise oder gänzlich in zwei Lagen geformt ist.

10. Batterie nach Anspruch 1, wobei die Elektrodenleitung (127) gefaltete Abschnitte umfasst, die den ersten und den zweiten Teil derart verbinden, dass der erste und der zweite Teil in Bezug aufeinander gebogen sind, und
wobei sich der erste Teil zwischen zwei gefalteten Abschnitten ausdehnt, die voneinander beabstandet sind.

11. Batterie nach Anspruch 10, wobei der Anschlussstift an einen ausgedehnten Abschnitt des ersten Teils angeschlossen ist.

## Revendications

1. Batterie, comprenant :
un assemblage d'électrodes (10) ;
une plaque de couverture (130) comprenant une borne d'électrode (137) ; et
un fil d'électrode (127) accouplé à la plaque de couverture (130), dans laquelle le fil d'électrode (127) assure la connexion électrique de l'assemblage d'électrodes (10) et de la borne d'électrode (137) ;
dans laquelle un emplacement d'accouplement de la plaque de couverture (130) et du fil d'électrode (127) est constitué par le centre du fil d'électrode (127) ;
dans laquelle la plaque de couverture (130) comprend une broche d'accouplement (131) débordant à travers le fil d'électrode (127) ;
dans laquelle une extrémité de la broche d'accouplement (131) est pressée sur le fil d'électrode (127) sur un côté du fil d'électrode (127) opposé à la plaque de couverture (130), et dans laquelle ladite extrémité de la broche d'accouplement (131) a la forme d'une unité de tête s'étendant ver l'extérieur ;
dans laquelle le fil d'électrode (127) comprend :
une première partie (127a) faisant face à la plaque de couverture (130) et accouplée à celle-ci ; et
une deuxième partie (127b) repliée à partir de la première partie (127a) et accouplée à une languette d'électrode (17) débordant de l'assemblage d'électrodes (10) ;
**caractérisée en ce qu'**un espace d'évitement (127') destiné à éviter une interférence mécanique entre la deuxième partie (127b) et la broche d'accouplement (131) est formé dans la deuxième partie (127b) du fil d'électrode (127) ; et
l'unité de tête est logée dans l'espace d'évitement (127').

2. Batterie selon la revendication 1, dans laquelle la deuxième partie (127b) du fil d'électrode (127) est divisée en deux parties par l'espace d'évitement (127').

3. Batterie selon les revendications 1 ou 2, dans laquelle la deuxième partie (127b) du fil d'électrode (127) a la forme d'une plaque, dans laquelle l'espace d'évitement (127') est agencé sous forme d'un trou.

4. Batterie selon l'une quelconque des revendications 1 à 3, dans laquelle la deuxième partie (227b) du fil d'électrode (227) comprend une première couche (272b1) et une deuxième couche (272b2) ; et
dans laquelle la languette d'électrode (17) est disposée entre les première et deuxième couches.

5. Batterie selon l'une des revendications 1 à 3, dans laquelle la deuxième partie (227b) du fil d'électrode (227) comprend une première couche (272b1) et une deuxième couche(272b2) ; et
dans laquelle la languette d'électrode (17) est disposée sur les première et deuxième couches.

6. Batterie selon la revendication 1, dans laquelle la deuxième partie (227b) du fil d'électrode (227) comprend une première couche (227b1) et une deuxième couche (227b2) ;
dans laquelle la première couche (227b1) est divisée en deux parties pour établir un espace d'évitement (227') ;
dans laquelle la deuxième couche (227b2) a la forme d'une plaque entière ; et
dans laquelle la deuxième couche (227b2) recouvre une partie de l'espace d'évitement (227') de la première couche (227b1).

7. Batterie selon la revendication 1, dans laquelle la deuxième partie (327b) du fil d'électrode (327) comprend une première couche (327b1) et une deuxième couche (327b2) ; et
dans laquelle les première et deuxième couches sont divisées en deux parties pour établir un espace d'évitement (327').

8. Batterie selon l'une quelconque des revendications précédentes, dans laquelle la première partie (427a) du fil d'électrode (427) comprend une première couche (427a1) et une deuxième couche (427b1).

9. Batterie selon la revendication 1, dans laquelle le fil d'électrode (127) est partiellement ou entièrement formé en deux coches.

10. Batterie selon la revendication 1, dans laquelle le fil d'électrode (127) comprend des parties pliées connectant les première et deuxième parties, de sorte que les première et deuxième parties sont pliées l'une par rapport à l'autre ; et
dans laquelle la première partie s'étend entre deux parties pliées qui sont espacées l'une de l'autre.

11. Batterie selon la revendication 10, dans laquelle la broche d'accouplement est accouplée à une partie étendue de la première partie.
